# EUROPEAN PATENT APPLICATION

(11) **EP 4 819 228 A1**
(43) Date of publication of application: **07.10.2026**
(21) Application number: 24899254.7
(22) Date of filing: 12.07.2024
(51) Int. Cl.: H01M 4/36, H01M 4/133, H01M 10/052, C01B 32/205

(54) **GRAPHITE NEGATIVE ELECTRODE ACTIVE MATERIAL AND PREPARATION METHOD THEREFOR, NEGATIVE ELECTRODE PLATE, SECONDARY BATTERY, AND ELECTRICAL APPARATUS**

(30) Priority: 07.12.2023 CN 202311675692
(71) Applicant: Contemporary Amperex Technology Co., Limited, Ningde, Fujian 352100 (CN)
(72) Inventor: MA, Jianjun, Ningde, Fujian 352100 (CN); HE, Libing, Ningde, Fujian 352100 (CN); PENG, Bin, Ningde, Fujian 352100 (CN)
(74) Representative: Gong, Jinping
(86) International application number: PCT/CN2024/105233
(87) International publication number: WO 2025/118603

(57) **Abstract**

A graphite negative electrode active material and a preparation method therefor, a negative electrode plate, a secondary battery, and an electrical appparatus. A particle body of the graphite negative electrode active material comprises an interior area and a surface layer area at least partially surrounding the interior area, the surface layer area referring to an area formed extending a distance of 30 nm from the surface of the particle body of the graphite negative electrode active material toward the interior, and the surface layer area comprising a disordered layer. The graphite negative electrode active material can balance the kinetic performance and the cycling stability of a battery.

## Description

### CROSS-REFERENCE

The present disclosure refers to Chinese Patent Application No. 202311675692.5, entitled "GRAPHITE NEGATIVE ELECTRODE ACTIVE MATERIAL AND PREPARATION METHOD THEREFOR, NEGATIVE ELECTRODE PLATE, SECONDARY BATTERY, AND ELECTRIC DEVICE", filed on December 7, 2023, which is incorporated herein by reference in its entirety.

### TECHNICAL FIELD

The present disclosure relates to the technical field of batteries, and in particular, to a graphite negative electrode active material and a preparation method therefor, a negative electrode plate, a secondary battery, and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace.

With the continuous expansion of application scenarios of secondary batteries and the continuous improvement of charging and discharging rate, higher requirements are put forward for the kinetic performance of the batteries. However, the improvement of the rate capability of the batteries is generally achieved at the expense of the cycle life.

### SUMMARY

The present disclosure is made in view of the issues described above, and an objective of the present disclosure is to provide a graphite negative electrode active material and a preparation method therefor, as well as a negative electrode plate containing the graphite negative electrode active material, a secondary battery, and an electric device, so as to balance kinetic performance and cycling stability of a battery.

A first aspect of the present disclosure provides a graphite negative electrode active material. A particle body of the graphite negative electrode active material includes an internal region and a surface layer region at least partially surrounding the internal region, the surface layer region refers to a region formed by extending from the surface of the particle body of the graphite negative electrode active material to the interior of the particle by a distance of 30 nm, and the surface layer region includes a disordered layer.

The disordered layer mainly includes amorphous carbon. Carbon atoms in the amorphous carbon structure are not regularly arranged, which renders intermolecular interactions of the disordered layer more complex, thereby resulting in higher strength and hardness as compared to graphite crystals in the internal region. As a result, the probability of surface damage to graphite particles caused by friction between particles and between particles and a stirring tank during slurry preparation is reduced, and the risk of particle cracking of the graphite negative electrode active material and exposure of new interfaces during the cold pressing process of an electrode plate is reduced, such that the graphite negative electrode active material retains a higher particle integrity in the manufacturing process. The graphite negative electrode active material with high particle integrity has few surface defects and a favorable interface with the electrolytic solution, which can effectively reduce side reactions between the negative electrode plate and the electrolytic solution, decrease the loss of active lithium, and contribute to improvements in storage stability and cycling stability of the battery. Meanwhile, the disordered layer on the graphite negative electrode active material is also conducive to improving the wettability of the electrolytic solution with the negative electrode plate, thereby enhancing the kinetic performance of the battery.

Unlike disordered layers applied on the surface of a graphite negative electrode active material in the prior art, the disordered layer of the graphite negative electrode active material according to the embodiments of the present disclosure is located within the particle body of the graphite negative electrode active material, and is derived from the same raw material as the graphite negative electrode active material, rather than being prepared by a post-treatment process. Therefore, compared to a graphite negative electrode active material in which a disordered layer is obtained by coating treatment on the surface of the particle body, the graphite negative electrode active material described herein exhibits better material consistency, enables the battery to demonstrate a longer cycle life, and achieves a balance between kinetic performance, cycling stability, and storage stability of the battery. The graphite negative electrode active material described herein is particularly suitable for energy storage batteries with stringent requirements on cycle life and storage life.

In any embodiment, the thickness of the disordered layer is 1 nm to 20 nm, optionally 3 nm to 16 nm.

The disordered layer having a thickness within the above range is beneficial for intercalation and deintercalation of active ions, thereby enhancing the kinetic performance of the battery, while avoiding an excessively high degree of side reactions between the graphite negative electrode active material and the electrolytic solution, thus balancing improvements in the cycling stability and the kinetic performance of the battery.

In any embodiment, the coefficient of variation of the thickness of the disordered layer is less than or equal to 50%, and the coefficient of variation refers to a ratio of a standard deviation of the thickness of the disordered layer to a mean value of the thickness of the disordered layer.

Unlike graphite negative electrode active materials in the prior art having a surface amorphous carbon coating obtained by a post-treatment process, the disordered layer on the surface of the graphite negative electrode active material according to the embodiments of the present disclosure has higher uniformity, and a lower coefficient of variation of the thickness of the disordered layer, which is beneficial for improving the structural uniformity and electrochemical stability of the graphite negative electrode active material, and for improving the storage stability and cycling stability of the secondary battery.

In any embodiment, I_{D}/I_{G} of the graphite negative electrode active material is 0.05 to 0.10, I_{D}/I_{G} is a ratio of an intensity of a D peak to an intensity of a G peak obtained from Raman spectroscopy, I_{D} represents the intensity of the D peak in Raman spectroscopy at 1350 ± 100 cm⁻¹, and I_{G} represents the intensity of the G peak in Raman spectroscopy at 1580 ± 100 cm⁻¹.

The I_{D}/I_{G} of the graphite negative electrode active material may be used to characterize the degree of surface disorder of the graphite negative electrode active material. Unlike active materials in which a disordered layer is applied on the surface of the graphite particle body by a post-treatment process, the graphite negative electrode active material according to the embodiments of the present disclosure has a disordered layer on its surface, while exhibiting a lower degree of surface disorder. In the active materials in which a disordered layer is applied on the surface of the graphite particle body by a post-treatment process, the disordered layer is typically derived from coated organic carbon, such that the carbonized disordered layer exhibits a high degree of surface disorder. In contrast, in the graphite negative electrode active material according to the embodiments of the present disclosure, the disordered layer structure in the surface layer region and other portions of the graphite negative electrode active material are derived from the same precursor, and the disordered layer exhibits high uniformity and an extremely thin thickness, such that the disordered layer can achieve a lower degree of surface disorder. In this way, the graphite negative electrode active material can exert the advantages of the disordered layer, enhancing the kinetic performance of the battery, while avoiding excessive side reactions caused by an excessively high degree of surface disorder of the material, such that the kinetic performance of the battery can be enhanced while also ensuring cycling stability and storage stability of the battery.

In any embodiment, the interlayer spacing of the disordered layer of the graphite negative electrode active material is denoted as d1, the interlayer spacing of the internal region of the graphite negative electrode active material is denoted as d2, and the graphite negative electrode active material satisfies d1 > d2. In some exemplary embodiments, d1 is 0.3365 nm to 0.3378 nm. In some exemplary embodiments, d2 is 0.3358 nm to 0.3364 nm.

Since the interlayer spacing of the disordered layer is greater than the interlayer spacing of the internal region of the graphite negative electrode active material, the function of a lithium-intercalation buffer layer can be achieved, thereby improving the wettability of the electrolytic solution with the graphite negative electrode active material and enhancing the fast-charging performance of the battery.

In any embodiment, the graphite negative electrode active material includes both primary particles and secondary particles. In some exemplary embodiments, based on the total number of the primary particles and the secondary particles in the graphite negative electrode active material, the proportion of the number of the secondary particles is less than or equal to 50%.

The graphite negative electrode active material with a low number proportion of secondary particles is beneficial for maintaining particle integrity of the graphite negative electrode active material during the process of battery preparation, reducing generation of new interfaces, decreasing consumption of active lithium during cycling, and further improving the cycling stability of the secondary battery. Meanwhile, the presence of a certain number of secondary particles can reduce expansion of the negative electrode plate while ensuring the kinetic performance of the secondary battery, thereby enabling a kinetic window across the full life cycle of the battery cell. Therefore, severe capacity fade and drastic deterioration of battery life caused by lithium plating due to uneven current distribution can be prevented, thereby comprehensively improving the cycling stability of the battery.

In any embodiment, the particle size distribution (Dv90-Dv10)/Dv50 of the graphite negative electrode active material is 1.0 to 1.5, optionally 1.1 to 1.45.

Controlling the particle size distribution of the graphite negative electrode active material within the above range facilitates the increase in the compact packing density of the graphite negative electrode active material, thereby improving the compaction density of the negative electrode plate. In other words, the negative electrode plate requires a smaller cold-pressing pressure to achieve the same compaction density, which reduces the probability of particle cracking of the graphite negative electrode active material during the cold pressing process, and further enhances the particle integrity of the graphite negative electrode active material during processing. Moreover, the small internal stress within the particles of the graphite negative electrode active material is beneficial for maintaining a long-term pore channel structure of the electrode plate during cycling, thereby preserving the original pore structure of the electrode plate during cycling, maintaining smooth lithium-ion intercalation pathways, and reducing reformation of a film on the graphite negative electrode active material during charging. Therefore, the kinetic performance, cycle life, and storage stability are improved. Furthermore, the particle size distribution within the above range can also enhance uniformity of lithium intercalation among particles of the graphite negative electrode active material, reduce polarization, and prevent lithium plating caused by uneven current density, which is beneficial for achieving long-term cycling stability. In addition, the particle size distribution within the above range is also conducive to improving the processability of the electrode plate, and the uniformity of slurry stirring is not affected by excessive particles with a small particle size in the graphite negative electrode active material, which is beneficial for improving the uniformity and stability of electrode plate quality and facilitating the realization of long-term cycling stability.

When the particle size distribution (Dv90-Dv10)/Dv50 of the graphite negative electrode active material is 1.1 to 1.45, the preparation of the graphite negative electrode active material achieves a higher yield, which is beneficial for cost reduction; meanwhile, the cycling stability and storage stability of the graphite negative electrode active material are further improved.

In any embodiment, the volume distribution particle size Dv50 of the graphite negative electrode active material is denoted as A, the volume distribution particle size Dv50 of the graphite negative electrode active material after cold pressing under a pressure of 20000 N is denoted as B, and the graphite negative electrode active material satisfies B/A ≥ 85%. In some embodiments, the graphite negative electrode active material satisfies that: B/A is 85% to 98%.

The graphite negative electrode active material still maintains high particle integrity after cold pressing, which is conducive to improving cycling stability.

In any embodiment, the specific surface area of the graphite negative electrode active material is 1.2 m²/g to 1.9 m²/g. In some embodiments, the specific surface area of the graphite negative electrode active material is 1.3 m²/g to 1.8 m²/g.

The low specific surface area of the graphite negative electrode active material is conducive to further reducing the degree of side reactions of the graphite negative electrode active material and to improving the cycle life of the secondary battery.

In any embodiment, the volume distribution particle size Dv50 of the graphite negative electrode active material is 7.0 µm to 14.0 µm. In some embodiments, the volume distribution particle size Dv50 of the graphite negative electrode active material is 8.0 µm to 12.0 µm.

In any embodiment, the powder compaction density of the graphite negative electrode active material under a pressure of 49000 N is less than or equal to 1.85 g/cm³. In some embodiments, the powder compaction density of the graphite negative electrode active material under a pressure of 49000 N is 1.75 g/cm³ to 1.85 g/cm³.

The graphite negative electrode active material having a powder compaction density within the above range can more easily maintain high particle integrity during cold pressing process, thereby facilitating the improvements of the cycle life of the secondary battery.

In any embodiment, the specific capacity of the graphite negative electrode active material is 345 mAh/g to 355 mAh/g. In some embodiments, the specific capacity of the graphite negative electrode active material is 347 mAh/g to 353 mAh/g.

The graphite negative electrode active material having a specific capacity within the above range neither undergoes significant lattice expansion due to an excessively high degree of graphitization of the graphite negative electrode active material, nor suffers from difficulty in compaction due to an excessively low degree of graphitization of the graphite negative electrode active material, which would otherwise require higher cold-pressing pressure to achieve the same compaction density of the electrode plate. Higher cold-pressing pressure may result in cracking during the cold pressing process and formation of new interfaces consuming excessive active lithium during cycling. Therefore, the cycle life of the secondary battery is comprehensively improved.

A second aspect of the present disclosure provides a preparation method for a graphite negative electrode active material. The method includes the following steps: providing a raw material; processing the raw material to obtain an intermediate product; subjecting the intermediate product to graphitization treatment to obtain a graphitized product; and sieving the graphitized product to obtain the graphite negative electrode active material, where a particle body of the graphite negative electrode active material includes an internal region and a surface layer region at least partially surrounding the internal region, the surface layer region refers to a region formed by extending from the surface of the particle body of the graphite negative electrode active material to the interior of the particle by a distance of 30 nm, and the surface layer region includes a disordered layer.

In any embodiment, the maximum power of the graphitization treatment is 70% to 90% of the rated power of a graphitization treatment device.

The maximum power adopted in the graphitization treatment in the present disclosure is required to be lower than the rated power of the graphitization treatment device, so as to achieve uniformity of the thermal field during the graphitization treatment process. By controlling the maximum power of the graphitization treatment, the degree of graphitization of the graphite negative electrode active material during the heat treatment process can be effectively controlled, such that while the internal region of the particle of the graphite negative electrode active material is highly graphitized, a uniform disordered layer is formed on the surface of the particle body, thereby contributing to improvements in cycling stability of the secondary battery.

In any embodiment, the duration at the maximum power in the graphitization treatment is 10 h to 50 h.

An appropriate graphitization treatment temperature and an appropriate graphitization treatment duration do not readily cause excessive rearrangement of the precursor, which would otherwise lead to an excessively high specific surface area of the graphite negative electrode active material after the graphitization treatment and deteriorated high-temperature performance, and can also effectively improve the degree of graphitization of the graphite negative electrode active material, thereby contributing to simultaneous improvement of the high-temperature storage performance and cycle life of the secondary battery.

In any embodiment, the temperature of the graphitization treatment is 2600 °C to 3000 °C.

An appropriate graphitization treatment temperature and an appropriate graphitization treatment duration do not readily cause excessive rearrangement of the precursor, which would otherwise lead to an excessively high specific surface area of the graphite negative electrode active material after the graphitization treatment and deteriorated high-temperature performance, and can also effectively improve the degree of graphitization of the graphite negative electrode active material, thereby contributing to simultaneous improvement of the high-temperature storage performance and cycle life of the secondary battery.

In any embodiment, the raw material includes at least one of petroleum coke, needle coke, and pitch coke. In some embodiments, the raw material is needle coke.

Needle coke has a series of advantages such as low thermal expansion coefficient, low voidage, low sulfur content, low ash content, low metal content, high electrical conductivity, and ease of graphitization. The graphite negative electrode active material obtained after graphitization treatment of the needle coke can achieve a high ultimate compaction density and exhibits a low cycling expansion rate.

In any embodiment, based on the total area of the raw material structure, the volume proportion of fibrous structures in the raw material is greater than or equal to 55%. In some embodiments, the volume proportion of fibrous structures in the raw material is 58% to 70%.

The raw material with a high proportion of fibrous structures is beneficial for improving the compaction density and specific capacity of the graphite negative electrode active material, allowing the graphite negative electrode active material to retain high integrity during the compaction process, such that the battery achieves good energy density while maintaining long cycle life. However, an excessively high proportion of fibrous structures will increase the cost of the graphite negative electrode active material, as well as the expansion rate, and deteriorate the kinetic performance. The raw materials with a fibrous structure volume proportion within the above range have relatively low cost, while providing graphite with good specific capacity, enabling a kinetic window across the full life cycle of the battery cell, thereby comprehensively improving the long-term cycle life and electrochemical performance of the battery.

In any embodiment, processing the raw material specifically includes the following steps: crushing, shaping, and classifying the raw material to obtain a first precursor; granulating the first precursor to obtain a second precursor; and carbonizing a mixture of the first precursor and the second precursor at a low temperature to obtain the intermediate product.

In any embodiment, the Dv50 particle size of the first precursor is 6.0 µm to 10.0 µm.

In any embodiment, the particle size distribution (Dv90-Dv10)/Dv50 of the first precursor is 1.05 to 1.75.

In any embodiment, the tap density of the first precursor is 0.5 g/cm³ to 0.7 g/cm³.

In any embodiment, the Dv50 particle size of the second precursor is 11.0 µm to 15.0 µm.

Since the second precursor is obtained by granulating the first precursor, the second precursor primarily forms secondary particles in the graphite negative electrode active material.

Controlling the particle size of the first precursor and the second precursor facilitates adjustment of the particle size and particle size distribution of the graphite negative electrode active material, thereby improving the cycling stability of the battery. A third aspect of the present disclosure provides a negative electrode plate. The negative electrode plate includes the graphite negative electrode active material according to any of the embodiments or the graphite negative electrode active material prepared by the preparation method according to any of the embodiments.

A fourth aspect of the present disclosure provides a secondary battery. The secondary battery includes the negative electrode plate according to the third aspect of the present disclosure.

A fifth aspect of the present disclosure provides an electric device. The electric device includes the secondary battery according to the fourth aspect of the present disclosure.

### BRIEF DESCRIPTION OF THE DRAWINGS

In order to more clearly illustrate the technical solutions of the embodiments of the present disclosure, the drawings required to be used in the embodiments of the present disclosure are briefly described below. Apparently, the drawings in the following description illustrate merely some embodiments of the present disclosure, and those of ordinary skill in the art may still derive other drawings from these drawings without creative efforts.
FIG. 1 is a schematic diagram of a cross-sectional image of a particle of a graphite negative electrode active material according to the present disclosure;
FIG. 2 is a schematic diagram of an embodiment of a secondary battery according to the present disclosure;
FIG. 3 is a schematic exploded diagram of an embodiment of a secondary battery according to the present disclosure;
FIG. 4 is a schematic diagram of an embodiment of a battery module according to the present disclosure;
FIG. 5 is a schematic diagram of an embodiment of a battery pack according to the present disclosure;
FIG. 6 is a schematic exploded diagram of the embodiment of the battery pack shown in FIG. 5;
FIG. 7 is a schematic diagram of an embodiment of an electric device including the secondary battery according to the present disclosure as a power source;
FIG. 8 is a transmission electron microscopy image of the graphite negative electrode active material prepared according to Example 1; and
FIG. 9 is a transmission electron microscopy image of the graphite negative electrode active material prepared according to Comparative Example 2.

The drawings are not necessarily drawn to scale. Reference numerals in the drawings are explained as follows:
1: battery pack, 2: upper case body, 3: lower case body, 4: battery module, 5: secondary battery, 51: shell body, 52: electrode assembly, 53: cover plate, 100: graphite negative electrode active material, 101: surface layer region, 102: internal region.

### DETAILED DESCRIPTION

Hereinafter, embodiments specifically disclosing the graphite negative electrode active material and the preparation method therefor, the secondary battery, and the electric device of the present disclosure are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present disclosure, unless otherwise specified, the numerical range "a to b" indicates an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure can be combined with one another to form new technical solutions, and such technical solutions should be deemed to be included in the disclosure of the present disclosure.

Unless otherwise specified, all technical features and optional technical features of the present disclosure can be combined with one another to form new technical solutions, and such technical solutions should be deemed to be included in the disclosure of the present disclosure.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, the "include" and "comprise" mentioned in the present disclosure are open-ended or closed-ended. For example, the "include" and "comprise" may mean that other unlisted components may also be included or comprised or that only the listed components are included or comprised.

Unless otherwise specified, the term "or" in the present disclosure is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, the terms used in the present disclosure have well-known meanings that are commonly understood by those skilled in the art.

Unless otherwise specified, the values of the parameters mentioned in the present disclosure can be measured by various test methods commonly used in the art. For example, they can be measured according to the test methods given in the present disclosure.

Unless otherwise specified, in the present disclosure, the term "active ion" refers to an ion that can be intercalated and deintercalated back and forth between the positive and negative electrodes of the secondary battery, including but not limited to, lithium ion, and the like.

In the present disclosure, the terms "a plurality of" and "multiple" mean two or more.

The negative electrode active material is an important component of a secondary battery, and has a critical impact on the capacity, energy density, cycling stability, and kinetic performance of the secondary battery. The primary means of improving the kinetic performance of the battery is to increase the wettability between the negative electrode active material and the electrolytic solution. However, this inevitably leads to a corresponding increase in the degree of side reactions between the negative electrode active material and the electrolytic solution, causing additional loss of active lithium and reducing the cycling stability of the secondary battery. That is, the improvement of the kinetic performance of the secondary battery is generally achieved at the expense of its cycle life.

Based on this, the present disclosure provides a graphite negative electrode active material. The particle body of the graphite negative electrode active material includes an internal region and a surface layer region at least partially surrounding the internal region, the surface layer region refers to a region formed by extending from the surface of the particle body of the graphite negative electrode active material to the interior of the particle by a distance of 30 nanometers (nm), and the surface layer region includes a disordered layer.

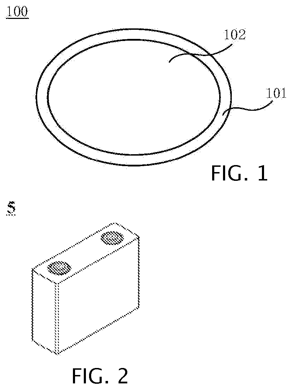

FIG. 1 is a schematic diagram of a cross-sectional image of a particle of a graphite negative electrode active material 100 according to the present disclosure. As shown in FIG. 1, the region formed by extending from the surface of the particle body of the graphite negative electrode active material 100 to the interior of the particle by a distance of 30 nm is the surface layer region 101, the region of the inner side the surface layer region 101 is the internal region 102, and the surface layer region 101 includes a disordered layer.

The carbon material in the disordered layer can be characterized by transmission electron microscopy (TEM) testing. A thin slice with a thickness of about 100 nm is cut from the middle of the particle body of the graphite negative electrode active material by focused ion beam (FIB), and the thin slice is then subjected to TEM testing. It can be observed that the surface layer region includes a disordered layer in which the lattice fringes exhibit long-range disorder and short-range order, and the electron diffraction pattern at the disordered layer exhibits a halo shape.

The disordered layer mainly includes amorphous carbon. Carbon atoms in the amorphous carbon structure are not regularly arranged, which renders intermolecular interactions of the disordered layer more complex, thereby resulting in higher strength and hardness as compared to graphite crystals in the internal region. As a result, the probability of surface damage to graphite particles caused by friction between particles and between particles and a stirring tank during slurry preparation is reduced, and the risk of particle cracking of the graphite negative electrode active material and exposure of new interfaces during the cold pressing process of an electrode plate is reduced, such that the graphite negative electrode active material retains a higher particle integrity in the manufacturing process. The graphite negative electrode active material with high particle integrity has few surface defects and a favorable interface with the electrolytic solution, which can effectively reduce side reactions between the negative electrode plate and the electrolytic solution, decrease the loss of active lithium, and contribute to improvements in storage stability and cycling stability of the battery. Meanwhile, the disordered layer on the graphite negative electrode active material is also conducive to improving the wettability of the electrolytic solution with the negative electrode plate, thereby enhancing the kinetic performance of the battery.

Unlike disordered layers applied on the surface of a graphite negative electrode active material in the prior art, the disordered layer of the graphite negative electrode active material according to the embodiments of the present disclosure is located within the particle body of the graphite negative electrode active material, and is derived from the same raw material as the graphite negative electrode active material, rather than being prepared by a post-treatment process. Therefore, compared to a graphite negative electrode active material in which a disordered layer is obtained by coating treatment on the surface, the graphite negative electrode active material described herein exhibits better material consistency, enables the battery to demonstrate a longer cycle life, and achieves a balance between kinetic performance, cycling stability, and storage stability of the battery. The graphite negative electrode active material described herein is particularly suitable for energy storage batteries with stringent requirements on cycle life and storage life.

In some embodiments, the thickness of the disordered layer is 1 nm to 20 nm. In some embodiments, the thickness of the disordered layer is 3 nm to 16 nm.

In the present disclosure, the thickness of the disordered layer can be measured by methods known in the art. As an example, the thickness may be determined by transmission electron microscopy (TEM) testing. A thin slice with a thickness of about 20 nm to 50 nm is cut from the middle of the particle body of the graphite negative electrode active material by focused ion beam (FIB), and the thin slice is then subjected to TEM testing to obtain an original TEM image. The original image obtained from the above TEM testing is opened in Digital Micrograph software, and the disordered layer is identified based on diffraction fringes or lattice spacing. The thickness of the disordered layer is measured. Generally, the disordered layer has no diffraction fringes, and the lattice spacing is larger than that of the ordered layer.

In some embodiments, the thickness of the disordered layer is 1 nm, 4 nm, 5 nm, 8 nm, 10 nm, 12 nm, 15 nm, 16 nm, 20 nm, or a numerical range between any two thereof.

The disordered layer having a thickness within the above range is beneficial for intercalation and deintercalation of active ions, thereby enhancing the kinetic performance of the battery, while avoiding an excessively high degree of side reactions between the graphite negative electrode active material and the electrolytic solution, thus balancing improvements in the cycling stability and the kinetic performance of the battery.

In some embodiments, the coefficient of variation of the thickness of the disordered layer is less than or equal to 50%, and the coefficient of variation refers to the ratio of the standard deviation of the thickness of the disordered layer to the mean value of the thickness of the disordered layer.

In some embodiments, the coefficient of variation of the thickness of the disordered layer is 10%, 20%, 30%, 40%, 50%, or a numerical range between any two thereof.

As used herein, the term "coefficient of variation" refers to the ratio of the standard deviation to the mean value.

In the present disclosure, the coefficient of variation of the thickness of the disordered layer can be determined by methods known in the art. As an example, the coefficient of variation (cov) of the thickness of the disordered layer is calculated according to the formula cov = σ/u × 100%, where σ represents the standard deviation of the thickness of the disordered layer, and u represents the mean value of the thickness of the disordered layer, which are respectively calculated according to the following formulas: $σ = \sqrt{\frac{1}{n - 1} {\sum }_{1}^{n} {\left({X}_{i}-μ\right)}^{2}}$ $μ = \frac{1}{n} {\sum }_{i = 1}^{n} {X}_{i}$
where *Xᵢ* represents the thickness of the disordered layer, and n represents the total counted number. During the statistical process, at least 10 particles are selected for each specimen, and at least five different sites are measured for each particle.

Unlike graphite negative electrode active materials in the prior art having a surface amorphous carbon coating obtained by a post-treatment process, the disordered layer on the surface of the graphite negative electrode active material according to the embodiments of the present disclosure has higher uniformity, and a lower coefficient of variation of the thickness of the disordered layer, which is beneficial for improving the structural uniformity and electrochemical stability of the graphite negative electrode active material, and for improving the storage stability and cycling stability of the secondary battery.

In some embodiments, I_{D}/I_{G} of the graphite negative electrode active material is 0.05 to 0.10, I_{D}/I_{G} is a ratio of an intensity of a D peak to an intensity of a G peak obtained from Raman spectroscopy, I_{D} represents the intensity of the D peak in Raman spectroscopy at 1350 ± 100 centimeter⁻¹ (cm⁻¹), and I_{G} represents the intensity of the G peak in Raman spectroscopy at 1580 ± 100 cm⁻¹.

In the present disclosure, the I_{D}/I_{G} of the graphite negative electrode active material can be tested by any well-known mode of Raman spectroscopy. As an example, with reference to GB/T 40219-2021, an InVia Qontor (Reflex) Raman spectrometer is used for testing. A solid-state laser with a wavelength of 532 nm is used as the light source, and 100 sampling points are collected in a 100 micrometers (µm) × 100 µm region. The median value of the obtained I_{D}/I_{G} is taken as the I_{D}/I_{G} of the graphite negative electrode active material, where the median value refers to the middle number in the sequence of the collected I_{D}/I_{G} data arranged in order of size.

In some embodiments, the I_{D}/I_{G} of the graphite negative electrode active material is 0.05, 0.06, 0.07, 0.08, 0.09, 0.10, or a numerical range between any two thereof.

The I_{D}/I_{G} of the graphite negative electrode active material may be used to characterize the degree of surface disorder of the graphite negative electrode active material. Unlike active materials in which a disordered layer is applied on the surface of the graphite particle body by a post-treatment process, the graphite negative electrode active material according to the embodiments of the present disclosure has a disordered layer on its surface, while exhibiting a lower degree of surface disorder. In the active materials in which a disordered layer is applied on the surface of the graphite particle body by a post-treatment process, the disordered layer is typically derived from coated organic carbon, such that the carbonized disordered layer exhibits a high degree of surface disorder. In contrast, in the graphite negative electrode active material according to the embodiments of the present disclosure, the disordered layer structure in the surface layer region and other portions of the graphite negative electrode active material are derived from the same precursor, and the disordered layer exhibits high uniformity and an extremely thin thickness, such that the disordered layer can achieve a lower degree of surface disorder. In this way, the graphite negative electrode active material can exert the advantages of the disordered layer, enhancing the kinetic performance of the battery, while avoiding excessive side reactions caused by an excessively high degree of surface disorder of the material, such that the kinetic performance of the battery can be enhanced while also ensuring cycling stability and storage stability of the battery.

In some embodiments, the interlayer spacing of the disordered layer of the graphite negative electrode active material is denoted as d1, the interlayer spacing of the internal region of the graphite negative electrode active material is denoted as d2, and the graphite negative electrode active material satisfies d1 > d2. In some embodiments, 0.3365 nm ≤ d1 ≤ 0.3378 nm. In some embodiments, 0.3358 nm ≤ d2 ≤ 0.3364 nm.

As used herein, the term "interlayer spacing" refers to the shortest distance between two adjacent carbon atoms in the same carbon layer of graphite.

In the present disclosure, the interlayer spacing of different regions of the graphite negative electrode active material can be tested using instruments and methods known in the art. As an example, a high resolution transmission electron microscope (HRTEM) may be employed for testing. The test instrument may be the Spectra S/TEM scanning transmission electron microscope from Thermo Fisher Scientific.

In some embodiments, the interlayer spacing d1 of the disordered layer of the graphite negative electrode active material is 0.3365 nm, 0.3367 nm, 0.3369 nm, 0.3371 nm, 0.3372 m, 0.3373 nm, 0.3375 nm, 0.3378 nm, or a numerical range between any two thereof. In some embodiments, the interlayer spacing d2 of the internal region of the graphite negative electrode active material is 0.3358 nm, 0.3359 nm, 0.3361 nm, 0.3363 nm, 0.3364 nm, or a numerical range between any two thereof.

Since the interlayer spacing of the disordered layer is greater than the interlayer spacing of the internal region of the graphite negative electrode active material, the function of a lithium-intercalation buffer layer can be achieved, thereby improving the wettability of the electrolytic solution with the graphite negative electrode active material and enhancing the fast-charging performance of the battery.

In some embodiments, the graphite negative electrode active material includes both primary particles and secondary particles. In some embodiments, based on the total number of the primary particles and the secondary particles in the graphite negative electrode active material, the proportion of the number of the secondary particles is less than or equal to 50%.

As used herein, the term "primary particles" refers to particles in a non-agglomerated state.

As used herein, the term "secondary particles" refers to particles in an agglomerated state formed by aggregation of two or more primary particles.

The primary particles and the secondary particles can be distinguished by observing the particle cross-sections of the graphite negative electrode active material using a scanning electron microscope (SEM). In the present disclosure, the proportion of the number of the secondary particles in the graphite negative electrode active material can be determined by methods known in the art. As an example, a cross-section polisher (e.g., the IB-09010 CP argon ion cross-section polisher from JEOL, Japan) can be employed to prepare cross-sections of negative electrode plates. Then, with reference to JY/T010-1996, the cross-sections of the negative electrode plates are scanned using a scanning electron microscope (e.g., the Sigma 300 scanning electron microscope from ZEISS, Germany). In the test sample, multiple test regions are randomly selected, and images of the multiple test regions are obtained using the scanning electron microscope. The proportion of the number of graphite negative electrode active material particles having secondary particle morphologies in the total number of graphite negative electrode active material particles in each image is calculated. The mean value of multiple statistical results is taken as the proportion of the number of secondary particles in the graphite negative electrode active material.

In some embodiments, based on the total number of the primary particles and the secondary particles in the graphite negative electrode active material, the proportion of the number of the secondary particles is 50%, 40%, 30%, 20%, 10%, or a numerical range between any two thereof.

The graphite negative electrode active material with a low number proportion of secondary particles is beneficial for maintaining particle integrity of the graphite negative electrode active material during the process of battery preparation, reducing generation of new interfaces, decreasing consumption of active lithium during cycling, and further improving the cycling stability of the secondary battery. Meanwhile, the presence of a certain number of secondary particles can reduce expansion of the negative electrode plate while ensuring the kinetic performance of the secondary battery, thereby enabling a kinetic window across the full life cycle of the battery cell. Therefore, severe capacity fade and drastic deterioration of battery life caused by lithium plating due to uneven current distribution can be prevented, thereby comprehensively improving the cycling stability of the battery.

In some embodiments, the particle size distribution (Dv90-Dv10)/Dv50 of the graphite negative electrode active material is 1.0 to 1.5. In some embodiments, the particle size distribution (Dv90-Dv10)/Dv50 of the graphite negative electrode active material is 1.1 to 1.45.

As used herein, the terms "Dv90" and "Dv10" respectively refer to a particle size corresponding to 90% and 10% of the cumulative volume distribution of particles in a particle size distribution curve.

In the present disclosure, the volume distribution particle sizes Dv90 and Dv10 of the graphite negative electrode active material can be measured by methods known in the art. As an example, with reference to GB/T 19077-2016, a laser particle size analyzer is employed for the measurement. The test instrument may be the Mastersizer 3000 laser particle size analyzer from Malvern Instruments Ltd., United Kingdom.

In some embodiments, the particle size distribution (Dv90-Dv10)/Dv50 of the graphite negative electrode active material is 1.0, 1.05, 1.1, 1.15, 1.2, 1.25, 1.3, 1.35, 1.4, 1.45, 1.5, or a numerical range between any two thereof.

Controlling the particle size distribution of the graphite negative electrode active material within the above range facilitates the increase in the compact packing density of the graphite negative electrode active material, thereby improving the compaction density of the negative electrode plate. In other words, the negative electrode plate requires a smaller cold-pressing pressure to achieve the same compaction density, which reduces the probability of particle cracking of the graphite negative electrode active material during the cold pressing process, and further enhances the particle integrity of the graphite negative electrode active material during processing. Moreover, the small internal stress within the particles of the graphite negative electrode active material is beneficial for maintaining a long-term pore channel structure of the electrode plate during cycling, thereby preserving the original pore structure of the electrode plate during cycling, maintaining smooth lithium-ion intercalation pathways, and reducing reformation of a film on the graphite negative electrode active material during charging. Therefore, the kinetic performance, cycle life, and storage stability are improved. Furthermore, the particle size distribution within the above range can also enhance uniformity of lithium intercalation among particles of the graphite negative electrode active material, reduce polarization, and prevent lithium plating caused by uneven current density, which is beneficial for achieving long-term cycling stability. In addition, the particle size distribution within the above range is also conducive to improving the processability of the electrode plate, and the uniformity of slurry stirring is not affected by excessive particles with a small particle size in the graphite negative electrode active material, which is beneficial for improving the uniformity and stability of electrode plate quality and facilitating the realization of long-term cycling stability.

When the particle size distribution (Dv90-Dv10)/Dv50 of the graphite negative electrode active material is 1.1 to 1.45, the preparation of the graphite negative electrode active material achieves a higher yield, which is beneficial for cost reduction; meanwhile, the cycling stability and storage stability of the graphite negative electrode active material are further improved.

In some embodiments, the volume distribution particle size Dv50 of the graphite negative electrode active material is denoted as A, the volume distribution particle size Dv50 of the graphite negative electrode active material after cold pressing under a pressure of 20000 newtons (N) is denoted as B, and the graphite negative electrode active material satisfies B/A ≥ 85%. In some embodiments, the graphite negative electrode active material satisfies that: B/A is 85% to 98%.

As used herein, the term "volume distribution particle size Dv50" refers to a particle size corresponding to 50% of the cumulative volume distribution of particles in a particle size distribution curve.

In the present disclosure, the volume distribution particle size Dv50 of the active material can be measured by methods known in the art. As an example, with reference to GB/T 19077-2016, a laser particle size analyzer is employed for the measurement. The test instrument may be the Mastersizer 3000 laser particle size analyzer from Malvern Instruments Ltd., United Kingdom. The ratio of Dv50 before and after cold pressing can be calculated based on the ratio of the Dv50 of the powder and the Dv50 measured from the scraped powder after cold pressing of the electrode plate.

In some embodiments, A/B is 85%, 86%, 87%, 88%, 89%, 90%, 91%, 92%, 93%, 94%, 95%, 96%, 97%, 98%, 99%, 100%, or a numerical range between any two thereof.

The graphite negative electrode active material still maintains high particle integrity after cold pressing, which is conducive to improving cycling stability.

In some embodiments, the specific surface area of the graphite negative electrode active material is 1.2 meter²/gram (m²/g) to 1.9 m²/g. In some embodiments, the specific surface area of the graphite negative electrode active material is 1.3 m²/g to 1.8 m²/g.

In the present disclosure, the specific surface area of the graphite negative electrode active material can be measured by methods known in the art. As an example, with reference to GB/T 19587-2017, the nitrogen adsorption specific surface area analysis method is employed for the measurement, and the result is calculated using the Brunauer-Emmett-Teller (BET) method. The test instrument may be the Tri-Star 3020 specific surface area pore size analysis tester from Micromeritics, USA.

In some embodiments, the specific surface area of the graphite negative electrode active material is 1.2 m²/g, 1.3 m²/g, 1.4 m²/g, 1.5 m²/g, 1.6 m²/g, 1.7 m²/g, 1.8 m²/g, 1.9 m²/g, or a numerical range between any two thereof.

The low specific surface area of the graphite negative electrode active material is conducive to further reducing the degree of side reactions of the graphite negative electrode active material and to improving the cycle life of the secondary battery.

In some embodiments, the volume distribution particle size Dv50 of the graphite negative electrode active material is 7.0 µm to 14.0 µm. In some embodiments, the volume distribution particle size Dv50 of the graphite negative electrode active material is 8.0 µm to 12.0 µm.

In some embodiments, the volume distribution particle size Dv50 of the graphite negative electrode active material is 7.0 µm, 8.0 µm, 9.0 µm, 10.0 µm, 11.0 µm, 12.0 µm, or a numerical range between any two thereof.

In some embodiments, the powder compaction density of the graphite negative electrode active material under a pressure of 49000 N is less than or equal to 1.85 grams/centimeter³ (g/cm³). In some embodiments, the powder compaction density of the graphite negative electrode active material under a pressure of 49000 N is 1.75 g/cm³ to 1.85 g/cm³.

As used herein, the term "powder compaction density" refers to the mass of powder particles per unit volume under a certain pressure.

In the present disclosure, the powder compaction density of the graphite negative electrode active material under a pressure of 49000 N can be measured by methods known in the art. As an example, with reference to GB/T 24533-2009, 1 g of graphite negative electrode active material powder is weighed out and added into a mold with a bottom area of 1.327 centimeter² (cm²). The mold is pressurized to 4900 kilograms (kg) (equivalent to 49000 N) and held for 30 seconds (s), and then the pressure is released and the mold is maintained for 10 s. The powder compaction density of the graphite negative electrode active material under a pressure of 49000 N is measured using an electronic compression tester (e.g., the UTM7305 electronic compression tester).

In some embodiments, the powder compaction density of the graphite negative electrode active material under a pressure of 49000 N is 1.69 g/cm³, 1.72 g/cm³, 1.75 g/cm³, 1.78 g/cm³, 1.82 g/cm³, 1.85 g/cm³, or a numerical range between any two thereof.

The graphite negative electrode active material having a powder compaction density within the above range can more easily maintain high particle integrity during cold pressing process, thereby facilitating the improvements of the cycle life of the secondary battery.

In some embodiments, the specific capacity of the graphite negative electrode active material is 345 milliampere-hour/gram (mAh/g) to 355 mAh/g. In some embodiments, the specific capacity of the graphite negative electrode active material is 347 mAh/g to 353 mAh/g.

As used herein, the term "specific capacity" refers to the ratio of the electrical capacity released by the active material to the mass of the active material.

In the present disclosure, the specific capacity of the graphite negative electrode active material can be determined using methods known in the art. As an example, the graphite negative electrode active material, a conductive agent carbon black, and polyvinylidene fluoride (PVDF) are mixed at a mass ratio of 91.6:1.8:6.6 in an appropriate amount of solvent NMP, and the mixture is stirred thoroughly to form a uniform negative electrode slurry. The negative electrode slurry is then uniformly applied on the surface of a negative electrode current collector copper foil, dried, and cold-pressed. Subsequently, a metallic lithium foil is used as the counter electrode, a polypropylene (PP) membrane is used as the separator, and an electrolytic solution is injected. The electrolytic solution is prepared by mixing dimethyl carbonate (DMC), ethyl methyl carbonate (EMC), and ethylene carbonate (EC) at a weight ratio of 1:1:1 to obtain an organic solvent, and then dissolving LiPF₆ in the above organic solvent to form an electrolytic solution with a concentration of 1.0 mol/L. As a result, a CR2430 button battery is assembled in a glove box under an argon atmosphere. At 25 degrees Celsius (°C), the button battery prepared above is first discharged at a constant current of 0.05 coulomb (C) until the voltage reaches 0.005 volt (V), then discharged at a constant current of 10 microamperes (µA) until the voltage reaches 0.005 V, and left to stand for 5 minutes (min). The first-cycle discharging capacity of the button cell is recorded. Subsequently, the button cell is charged at a constant current of 0.1C until the voltage reaches 2.0 V, and the charging capacity is recorded. The ratio of the charging capacity of the button battery to the mass of the graphite negative electrode active material sample is defined as the specific capacity of the graphite negative electrode active material.

In some embodiments, the specific capacity of the graphite negative electrode active material is 345 mAh/g, 346 mAh/g, 347 mAh/g, 348 mAh/g, 349 mAh/g, 350 mAh/g, 351 mAh/g, 352 mAh/g, 353 mAh/g, 354 mAh/g, 355 mAh/g, or a numerical range between any two thereof.

The graphite negative electrode active material having a specific capacity within the above range neither undergoes significant lattice expansion due to an excessively high degree of graphitization of the graphite negative electrode active material, nor suffers from difficulty in compaction due to an excessively low degree of graphitization of the graphite negative electrode active material, which would otherwise require higher cold-pressing pressure to achieve the same compaction density of the electrode plate. Higher cold-pressing pressure may result in cracking during the cold pressing process and formation of new interfaces consuming excessive active lithium during cycling. Therefore, the cycle life of the secondary battery is comprehensively improved.

A second aspect of the present disclosure provides a preparation method for a graphite negative electrode active material. The method includes the following steps: providing a raw material; processing the raw material to obtain an intermediate product; subjecting the intermediate product to graphitization treatment to obtain a graphitized product; and sieving the graphitized product to obtain the graphite negative electrode active material, where a particle body of the graphite negative electrode active material includes an internal region and a surface layer region at least partially surrounding the internal region, the surface layer region refers to a region formed by extending from the surface of the particle body of the graphite negative electrode active material to the interior of the particle by a distance of 30 nm, and the surface layer region includes a disordered layer.

As used herein, the term "graphitization treatment" refers to a heat treatment process of a carbon material. Under the action of high temperature, the carbon material undergoes a process in which the "microcrystal" grows and transforms from a two-dimensional carbon network structure into a three-dimensional ordered structure.

In some embodiments, the maximum power of the graphitization treatment is 70% to 90% of the rated power of a graphitization treatment device.

In some embodiments, the maximum power of the graphitization treatment is 70%, 75%, 80%, 85%, 90%, or a numerical range between any two thereof of the rated power of a graphitization treatment device. It can be understood that the graphitization treatment apparatus refers to any apparatus capable of performing graphitization treatment, including but not limited to Acheson furnaces, box furnaces, inner-string furnaces, continuous graphitization furnaces, electric calcination furnaces, medium-frequency furnaces, tube furnaces, and the like. The rated power of the graphitization treatment device manufactured by different manufacturers may vary, and may be selected according to actual conditions. The maximum power adopted in the graphitization treatment in the present disclosure is required to be lower than the rated power of the graphitization treatment apparatus, so as to achieve uniformity of the thermal field during the graphitization treatment process.

In some embodiments, the graphitization treatment device is an inner-string furnace, and the rated power of the inner-string furnace is 25000 watts (W) to 32000 W.

In some embodiments, the graphitization treatment device is an Acheson furnace, and the rated power of the Acheson furnace is 28000 W to 30000 W.

In some embodiments, the duration at the maximum power in the graphitization treatment is 10 hours (h) to 50 h.

In some embodiments, the duration at the maximum power in the graphitization treatment is 10 h, 13 h, 16 h, 19 h, 22 h, 25 h, 28 h, 31 h, 33 h, 36 h, 39 h, 42 h, 45 h, 48 h, 50 h, or a numerical range between any two thereof.

In some embodiments, the graphitization treatment device is an inner-string furnace, and the duration at the maximum power in the graphitization treatment is 10 h to 30 h.

In some embodiments, the graphitization treatment device is an Acheson furnace, and the duration at the maximum power in the graphitization treatment is 30 h to 50 h.

In some embodiments, the temperature of the graphitization treatment is 2600 °C to 3000 °C.

In some embodiments, the temperature of the graphitization treatment is 2600 °C, 2700 °C, 2800 °C, 2900 °C, 3000 °C, or a numerical range between any two thereof.

An appropriate graphitization treatment temperature and an appropriate graphitization treatment duration do not readily cause excessive rearrangement of the precursor, which would otherwise lead to an excessively high specific surface area of the graphite negative electrode active material after the graphitization treatment and deteriorated high-temperature performance, and can also effectively improve the degree of graphitization of the graphite negative electrode active material, thereby contributing to simultaneous improvement of the high-temperature storage performance and cycle life of the secondary battery.

In some embodiments, the raw material includes at least one of petroleum coke, needle coke, and pitch coke. In some embodiments, the raw material is needle coke.

As used herein, the term "petroleum coke" refers to coke formed by high-temperature carbonization of petroleum residue oil or petroleum pitch.

As used herein, the term "needle coke" refers to coke having a needle-shaped texture that may be formed from coal tar pitch or petroleum pitch through liquid-phase carbonization to generate an anisotropic mesophase, followed by high-temperature carbonization and other processes.

As used herein, the term "pitch coke" refers to a solid material formed by high-temperature carbonization of coal tar pitch.

Needle coke has a series of advantages such as low thermal expansion coefficient, low voidage, low sulfur content, low ash content, low metal content, high electrical conductivity, and ease of graphitization. The graphite negative electrode active material obtained after graphitization treatment of the needle coke can achieve a high ultimate compaction density and exhibits a low cycling expansion rate.

In some embodiments, based on the total volume of the raw material structure, the volume proportion of fibrous structures in the raw material is greater than or equal to 55%. In some embodiments, the volume proportion of fibrous structures in the raw material is 58% to 70%.

As used herein, the term "fibrous structure", also referred to as a "streamlined structure", refers to a structure of the raw material exhibiting an obvious fibrous texture observed under a microscope.

Generally, according to the morphological characteristics and the dimension of the isochromatic region of the raw material observed under a polarized optical microscope, the microstructure of the raw material can be classified into mosaic type, domain type, and fibrous type. Generally, a microstructure of an isochromatic region with a dimension of less than 30 µm is determined as mosaic type; a microstructure of an isochromatic region with a size of greater than 30 µm is determined as domain type; and anisotropic strip-shaped isochromatic regions are determined as fibrous structure.

In the present disclosure, the volume proportion of the fibrous structures in the raw material can be determined by methods known in the art. For example, according to GB 1997-89, the raw material is sampled, crushed to 1 millimeter (mm), homogenized, and reduced to 40 grams (g) to 50 g. A 4 g to 5 g sample in the size range of 0.07 mm to 1.0 mm is obtained by square-hole sieving for specimen preparation. According to MT 116.1-86, polished sections of pulverized coke and lump coke are prepared, where the diameter of the pulverized coke polished section shall not be less than 22 mm, and the volume proportion of the binder phase shall be less than one-third. The specimen is then placed on a glass slide with clay, flattened, and mounted on the microscope stage for focusing. After calibrating the microscope, the polarizer and analyzer are adjusted to be orthogonal. A azurite plate (1λ) is inserted to render the field of view with a first-order red interference color. The step length of the micrometer stage is determined to ensure more than 400 effective measurement points are evenly distributed, with a point spacing of 0.3 mm to 0.5 mm and a row spacing of 0.5 mm to 0.8 mm. Starting from one end of the specimen, the microstructure type at the crosshair intersection is identified. The volume proportion of the fibrous structures in the raw material is calculated as the ratio of the number of effective measurement points of the fibrous structure optical texture to the total number of statistical measurement points.

In some embodiments, based on the total volume of the raw material structure, the volume proportion of fibrous structures in the raw material is 55%, 58%, 60%, 65%, 70%, or a numerical range between any two thereof.

The raw material with a high proportion of fibrous structures is beneficial for improving the compaction density and specific capacity of the graphite negative electrode active material, allowing the graphite negative electrode active material to retain high integrity during the compaction process, such that the battery achieves good energy density while maintaining long cycle life. However, an excessively high proportion of fibrous structures will increase the cost of the graphite negative electrode active material, as well as the expansion rate, and deteriorate the kinetic performance. The raw materials with a fibrous structure volume proportion within the above range have relatively low cost, while providing graphite with good specific capacity, enabling a kinetic window across the full life cycle of the battery cell, thereby comprehensively improving the long-term cycle life and electrochemical performance of the battery.

In some embodiments, the maximum specific capacity of the raw material that can be achieved is greater than the specific capacity of the graphite negative electrode active material.

By employing a high-grade raw material and controlling the degree of graphitization, the maximum specific capacity of the raw material that can be achieved is not fully utilized, thereby obtaining a graphite negative electrode active material in which the surface layer region includes a disordered layer, thus achieving a balance between the cycle life and kinetic performance of the battery.

In some embodiments, processing the raw material specifically includes: crushing, shaping, and classifying the raw material to obtain a first precursor; granulating the first precursor to obtain a second precursor; and carbonizing a mixture of the first precursor and the second precursor at a low temperature to obtain the intermediate product.

Crushing is the process of reducing the particle size of the raw material, and the raw material can be crushed by any mechanical device such as a crusher or a mechanical mill.

Shaping is the process of adjusting the curvature and particle size of the raw material.

Classifying is the process of adjusting the particle size distribution of the raw material to obtain a first precursor satisfying the particle size requirements. The particle size and particle size distribution of the first precursor can be controlled by adjusting the classification frequency and the air intake volume.

It can be understood that carbonizing the first precursor and the second precursor at a low temperature to obtain the intermediate product includes carbonizing the mixture of the first precursor and the second precursor at a low temperature to obtain the intermediate product, and separately carbonizing the first precursor and the second precursor to respectively obtain a first intermediate product and a second intermediate product.

In some embodiments, the Dv50 particle size of the first precursor is 6.0 µm to 10.0 µm.

In some embodiments, the Dv50 particle size of the first precursor is 6.0 µm, 7.0 µm, 8.0 µm, 9.0 µm, 10.0 µm, or a numerical range between any two thereof.

In some embodiments, the particle size distribution (Dv90-Dv10)/Dv50 of the first precursor is 1.05 to 1.75.

In some embodiments, the particle size distribution (Dv90-Dv10)/Dv50 of the first precursor is 1.05, 1.15, 1.25, 1.35, 1.45, 1.55, 1.65, 1.75, or a numerical range between any two thereof.

In some embodiments, the tap density of the first precursor is 0.5 g/cm³ to 0.7 g/cm³.

As used herein, the term "tap density" refers to the mass per unit volume of a powder measured after the powder in a container has been tapped under specified conditions.

In the present disclosure, the tap density of the first precursor can be measured by methods known in the art. As an example, a powder tap density tester may be employed for measurement with reference to GB/T 5162-2006. The test instrument may be the Bettersize BT-301 tester, with the following parameters: vibration frequency of 250 ± 15 times/minute, amplitude of 3 ± 0.2 mm, total vibrations of 5000 times, and graduated cylinder volume of 25 milliliters (mL).

In some embodiments, the tap density of the first precursor is 0.5 g/cm³, 0.55 g/cm³, 0.6 g/cm³, 0.65 g/cm³, 0.7 g/cm³, or a numerical range between any two thereof.

In some embodiments, the Dv50 particle size of the second precursor is 11.0 µm to 15.0 µm.

In some embodiments, the Dv50 particle size of the second precursor is 11.0 µm, 12.0 µm, 13.0 µm, 14.0 µm, 15.0 µm, or a numerical range between any two thereof.

Since the second precursor is obtained by granulating the first precursor, the second precursor primarily forms secondary particles in the graphite negative electrode active material.

Controlling the particle size of the first precursor and the second precursor facilitates adjustment of the particle size and particle size distribution of the graphite negative electrode active material, thereby improving the cycling stability of the battery.

In some embodiments, crushing, shaping, and classifying the raw material to obtain the first precursor includes: crushing, shaping, and classifying the raw material to obtain a secondary raw material; and removing 10% to 35% of the fine powder relative to the total mass of the secondary raw material to obtain the first precursor. The fine powder has a Dv50 of 3 µm to 7 µm and a Dv99 of less than or equal to 30 µm, and the particle size distribution (Dv90-Dv10)/Dv50 of the fine powder is greater than 1.6.

In some embodiments, the temperature of the low-temperature carbonization is 900 °C to 1300 °C, and the duration of the low-temperature carbonization is 24 h to 240 h.

In some embodiments, the temperature of the low-temperature carbonization is 900 °C, 1000 °C, 1100 °C, 1200 °C, 1300 °C, or a numerical range between any two thereof.

In some embodiments, the duration of the low-temperature carbonization is 24 h, 50 h, 75 h, 100 h, 150 h, 200 h, 240 h, or a numerical range between any two thereof.

### [Negative Electrode Plate]

In some embodiments, the negative electrode plate includes a negative electrode current collector and a negative electrode film layer disposed on at least one surface of the negative electrode current collector. For example, the negative electrode current collector is provided with two surfaces opposite to each other in its own thickness direction, and the negative electrode film layer is disposed on any one or both of the two opposite surfaces of the negative electrode current collector.

In some embodiments, the negative electrode film layer includes the graphite negative electrode active material according to the first aspect of the embodiments of the present disclosure or the graphite negative electrode active material prepared by the method according to the second aspect of the embodiments of the present disclosure. Therefore, the secondary battery can simultaneously achieve high initial coulombic efficiency, high energy density, and good cycle performance.

In some embodiments, the negative electrode film layer may further include other negative electrode active materials in addition to the above graphite negative electrode active material. In some embodiments, the other negative electrode active materials include, but are not limited to, one or more of conventional natural graphite, other artificial graphite, soft carbon, hard carbon, a silicon-based material, a tin-based material, and lithium titanate. The silicon-based material may include one or more of elemental silicon, an oxide of silicon, a silicon-carbon composite, a silicon-nitrogen composite, and a silicon alloy material. The tin-based material may include one or more of elemental tin, an oxide of tin, and a tin alloy material.

In some embodiments, the negative electrode film layer further includes a negative electrode conductive agent. The present disclosure does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

In some embodiments, the negative electrode film layer further includes a negative electrode binder. The present disclosure does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the negative electrode film layer further includes other auxiliary agents. As an example, other auxiliary agents may include thickeners, such as sodium carboxymethylcellulose (CMC) and PTC thermistor materials.

In some embodiments, a metal foil or a composite current collector may be used as the negative electrode current collector. As an example of the metal foil, a copper foil may be used. The composite current collector may include a polymer material substrate and a metal material layer formed on at least one surface of the polymer material substrate. As an example, the metal material may include one or more of copper, a copper alloy, nickel, a nickel alloy, titanium, a titanium alloy, silver, and a silver alloy. As an example, the polymer material substrate may include one or more of polypropylene (PP), polyethylene terephthalate (PET), polybutylene terephthalate (PBT), polystyrene (PS), and polyethylene (PE).

In some embodiments, the negative electrode film layer is generally formed by coating a negative electrode current collector with a negative electrode slurry, drying, and cold pressing. The negative electrode slurry is generally formed by dispersing a negative electrode active material, an optional conductive agent, an optional binder, and other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate of the present disclosure further includes a conductive bottom coating (e.g., composed of a conductive agent and a binder) disposed on the surface of the negative electrode current collector and positioned between the negative electrode current collector and the negative electrode film layer; in some embodiments, the negative electrode plate of the present disclosure further includes a protective layer covering the surface of the negative electrode film layer.

### [Positive Electrode Plate]

In some embodiments, the positive electrode plate includes a positive electrode current collector and a positive electrode film layer disposed on at least one surface of the positive electrode current collector. For example, the positive electrode current collector is provided with two surfaces opposite to each other in its own thickness direction, and the positive electrode film layer is disposed on any one or both of the two opposite surfaces of the positive electrode current collector.

A metal foil or a composite current collector may be used as the positive electrode current collector. As an example of the metal foil, an aluminum foil may be used. The composite current collector may include a polymer material substrate and a metal material layer formed on at least one surface of the polymer material substrate. As an example, the metal material may include one or more of aluminum, an aluminum alloy, nickel, a nickel alloy, titanium, a titanium alloy, silver, and a silver alloy. As an example, the polymer material substrate may include one or more of polypropylene (PP), polyethylene terephthalate (PET), polybutylene terephthalate (PBT), polystyrene (PS), and polyethylene (PE).

In some embodiments, the positive electrode film layer generally includes a positive electrode active material, an optional binder, and an optional conductive agent. The positive electrode film layer is generally formed by coating a positive electrode current collector with a positive electrode slurry, drying, and cold pressing. The positive electrode slurry is generally formed by dispersing a positive electrode active material, an optional conductive agent, an optional binder, and any other components in a solvent and stirring them uniformly. The solvent may be N-methylpyrrolidone (NMP), but is not limited thereto. As an example, the binder for use in the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. As an example, the conductive agent for use in the positive electrode film layer includes one or more of superconducting carbon, conductive graphite, acetylene black, carbon black, Ketjen black, a carbon dot, a carbon nanotube, graphene, and a carbon nanofiber.

The positive electrode active material may be any positive electrode active material well-known in the art for use in secondary batteries.

When the secondary battery of the present disclosure is a lithium-ion battery, the positive electrode active material may include, but is not limited to, one or more of a lithium-containing transition metal oxide, a lithium-containing phosphate, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, the positive electrode active material includes a lithium-containing phosphate. Examples of the lithium-containing phosphate may include, but are not limited to, one or more of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and respective modified compounds thereof.

In the present disclosure, the modified compounds of the above positive electrode active materials may be obtained by doping modification and/or surface-coating modification of the positive electrode active materials.

### [Electrolyte]

In some embodiments, the electrolyte is an electrolytic solution, where the electrolytic solution includes an electrolyte salt and a solvent.

The types of the electrolyte salt are not particularly limited, and a choice can be made as needed in practice.

When the secondary battery of the present disclosure is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The types of the solvent are not particularly limited, and a choice can be made as needed in practice. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further includes an additive. For example, the additive may include a negative electrode film-forming additive or a positive electrode film-forming additive, or may include an additive capable of improving certain properties of the secondary battery, such as an additive for improving the overcharge performance of the secondary battery, an additive for improving the high-temperature performance of the secondary battery, or an additive for improving the low-temperature power performance of the secondary battery.

### [Separator]

The present disclosure does not particularly limit the type of the separator, and any porous-structure separator known to have good chemical stability and mechanical stability may be selected.

In some embodiments, the material of the separator may include one or more of glass fiber, non-woven fabric, polyethylene, polypropylene, and polyvinylidene fluoride. The separator may be a single-layer film or a multi-layer composite film. When the separator is a multi-layer composite film, the materials of the layers are the same or different.

In some embodiments, the positive electrode plate, the separator, and the negative electrode plate may be manufactured into an electrode assembly through a winding process or a stacking process.

### Secondary Battery

A fourth aspect of the embodiments of the present disclosure provides a secondary battery.

The type of the secondary battery is not particularly limited in the present disclosure. For example, the secondary battery may be a lithium-ion battery, or the like. Typically, a secondary battery includes a positive electrode plate, a negative electrode plate, and an electrolyte. During the charging and discharging process of the secondary battery, active ions are intercalated and deintercalated back and forth between the positive electrode plate and the negative electrode plate, and the electrolyte plays a role in conducting the active ions between the positive electrode plate and the negative electrode plate. The type of the electrolyte is not particularly limited in the present disclosure, and a choice can be made as needed in practice. For example, the electrolyte may be selected from at least one of a solid-state electrolyte and a liquid-state electrolyte (i.e., an electrolytic solution). Secondary batteries using an electrolytic solution and some secondary batteries using a solid-state electrolyte may further include a separator. The separator is disposed between the positive electrode plate and the negative electrode plate to perform a function of isolation.

In some embodiments, the secondary battery may include an outer packaging. The outer packaging can be used for packaging the electrode assembly and electrolyte described above.

In some embodiments, the outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS).

The shape of the secondary battery is not particularly limited in the present disclosure and may be cylindrical, prismatic, or any other shape. FIG. 2 shows a secondary battery 5 having a prismatic structure as one example.

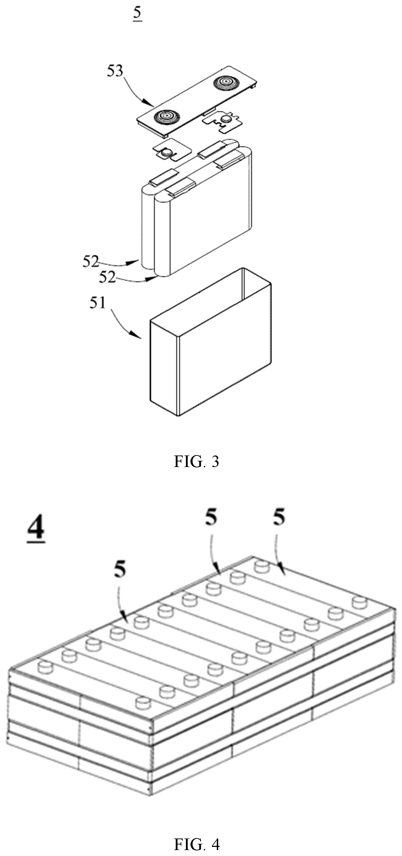

In some embodiments, as shown in FIG. 3, the outer packaging may include a shell body 51 and a cover plate 53. The shell body 51 may include a bottom plate and side plates connected to the bottom plate. The bottom plate and the side plates define, in an enclosing manner, an accommodating cavity. The shell body 51 is provided with an opening communicating with the accommodating cavity, and the cover plate 53 is configured for lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of electrode assemblies 52 included in the secondary battery 5 may be one or more and may be adjusted as needed.

The method for preparing the secondary battery of the present disclosure is well known. In some embodiments, a positive electrode plate, a separator, a negative electrode plate, and an electrolytic solution may be assembled to form a secondary battery. As an example, the positive electrode plate, the separator, and the negative electrode plate may form an electrode assembly through a winding process or a stacking process. The electrode assembly is placed in an outer packaging, dried, and then injected with electrolytic solution. After undergoing processes such as vacuum packaging, standing, formation, and shaping, a secondary battery is obtained.

In some embodiments of the present disclosure, the secondary battery according to the present disclosure may be assembled into a battery module. The number of secondary batteries included in the battery module may be a plurality, and the specific number may be adjusted according to the application and capacity of the battery module.

FIG. 4 is a schematic diagram of a battery module 4 as one example. As shown in FIG. 4, in the battery module 4, a plurality of secondary batteries 5 may be sequentially arranged in the length direction of the battery module 4. Certainly, the arrangement may also be in any other manner. Further, the plurality of secondary batteries 5 may be fixed by a fastener.

In some embodiments, the battery module 4 may further include a shell provided with an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

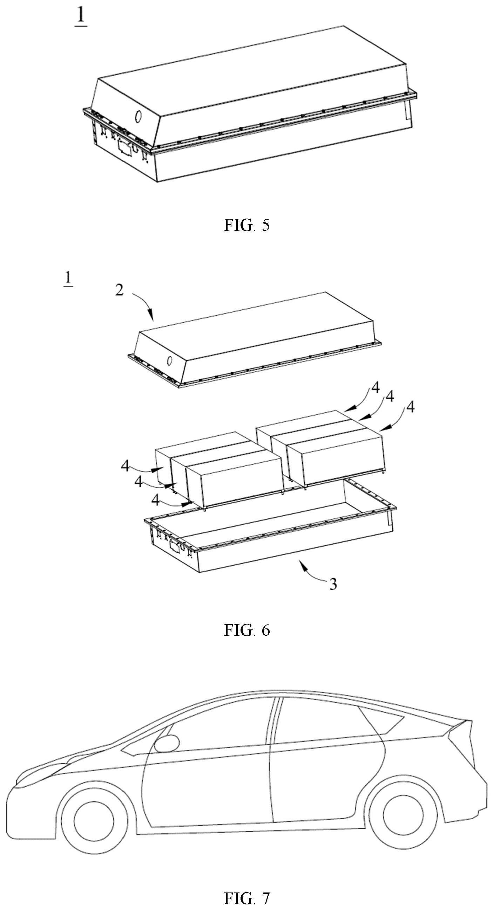

FIGs. 5 and 6 are schematic diagrams of a battery pack 1 as one example. As shown in FIGs. 5 and 6, the battery pack 1 may include a battery case and a plurality of battery modules 4 disposed in the battery case. The battery case includes an upper case body 2 and a lower case body 3. The upper case body 2 is configured to lid the lower case body 3 and the two form a closed space for accommodating the battery modules 4. The plurality of battery modules 4 may be arranged in any manner in the battery case.

### Electric Device

The present disclosure further provides an electric device. The electric device includes at least one of the secondary battery, the battery module, or the battery pack according to the present disclosure. The secondary battery, the battery module, or the battery pack may be used as a power source for the electric device, and they may also be used as an energy storage unit for the electric device. The electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

A secondary battery, a battery module, or a battery pack may be selected based on the use requirements of the electric device.

FIG. 7 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the electric device may be a mobile phone, a tablet computer, a laptop computer, or the like. The electric device is generally required to be light and thin, and thus a secondary battery can be used as the power source.

### Examples

The following examples more specifically describe the content disclosed in the present disclosure. These examples are intended for illustrative purposes only, since various modifications and changes within the scope of the content disclosed in the present disclosure will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

### Preparation Method

### Example 1

### (1) Preparation of graphite negative electrode active material

Needle coke having a fibrous structure proportion of 62.3% was crushed. The crushed material was subjected to shaping and fine powder removal to obtain a first precursor, where the mass ratio of the removed fine powder relative to the total mass of the crushed material was 21%. The fine powder had a Dv50 of 3 µm to 7 µm and a Dv99 of not greater than 30 µm, and the particle size distribution (Dv90-Dv10)/Dv50 of the fine powder was greater than 1.6. The first precursor had a Dv50 particle size of 9.2 µm, a particle size distribution (Dv90-Dv10)/Dv50 of 1.37, and a tap density of 0.67 g/cm³.

The first precursor was granulated and shaped in a reaction kettle to obtain a second precursor having a Dv50 particle size of 14.3 µm.

The first precursor and the second precursor were respectively placed in a kiln furnace for carbonization at 1100 °C for 24 h in the high-temperature zone to obtain a first intermediate product and a second intermediate product. The first intermediate product had a tap density of 0.99 g/cm³, and the second intermediate product had a tap density of 0.93 g/cm³.

The first intermediate product and the second intermediate product were respectively subjected to graphitization treatment at 2800 °C in an inner-string furnace. The graphitization treatment apparatus was an inner-string furnace with a rated power of 28000 W. The maximum power of the graphitization treatment was 22400 W, the ratio of the maximum power to the rated power was 80%, and the duration of maintaining the maximum power was 24 h, so as to obtain primary particles and secondary particles, respectively.

The primary particles and the secondary particles were uniformly mixed at a mass ratio of 1:1 and then sieved to obtain the final graphite negative electrode active material.

The thickness of the disordered layer of the graphite negative electrode active material was 11.2 nm, the coefficient of variation of the thickness of the disordered layer was 34.1%, the I_{D}/I_{G} was 0.078, the interlayer spacing d1 of the disordered layer was 0.3368 nm, the interlayer spacing d2 of the internal region was 0.3361 nm, the particle size distribution (Dv90-Dv10)/Dv50 was 1.28, the value of B/A was 93.4%, the specific surface area was 1.65 m²/g, the volume distribution particle size Dv50 was 10.2 µm, the powder compaction density under a pressure of 49000 N was 1.81 g/cm³, and the specific capacity was 350.8 mAh/g.

### (2) Preparation of negative electrode plate

The graphite negative electrode active material prepared above, a conductive agent Super P, a thickener sodium carboxymethylcellulose, and a binder styrene-butadiene rubber (SBR) were mixed at a dry material mass ratio of 96:1:1.2:1.8, and a solvent deionized water was added. The mixture was stirred in a vacuum mixer until the system became uniform to obtain a negative electrode slurry. A negative electrode current collector copper foil was uniformly coated with the negative electrode slurry, followed by drying, cold pressing, and slitting to obtain a negative electrode plate. The negative electrode film layer had a compaction density of 1.60 g/cm³ and an areal density of 9.2 mg/cm².

### (3) Preparation of positive electrode plate

A positive electrode active material lithium iron phosphate (LFP), a conductive agent Super P, and a binder polyvinylidene fluoride (PVDF) were mixed at a mass ratio of 97:1:2, and a solvent N-methylpyrrolidone (NMP) was added. The mixture was stirred in a vacuum mixer until the system became uniform to obtain a positive electrode slurry. A positive electrode current collector aluminum foil was uniformly coated with the positive electrode slurry, followed by drying, cold pressing, and slitting to obtain a positive electrode plate. The positive electrode film layer had a compaction density of 2.50 g/cm³ and an areal density of 19.7 mg/cm².

### (4) Preparation of electrolytic solution

In an argon-atmosphere glove box with a water content of less than 10 ppm, diethyl carbonate (DEC), ethyl methyl carbonate (EMC), and ethylene carbonate (EC) were mixed at a weight ratio of 1:1:1 to obtain an organic solvent. LiPF₆ was then dissolved in the above organic solvent to prepare an electrolytic solution having a concentration of 1.0 mol/L. Vinylene carbonate (VC) was then added, with a content of VC being 2% of the total mass of the electrolytic solution.

### (5) Preparation of separator

A polypropylene film was used as the separator.

### (6) Preparation of lithium-ion battery

The positive electrode plate, the separator, and the negative electrode plate described above were stacked in sequence to enable the separator to be disposed between the positive electrode plate and the negative electrode plate to play an isolating role, and were then wound to obtain an electrode assembly. The electrode assembly was placed in an outer packaging shell, dried, injected with the electrolytic solution, and subjected to vacuum packaging, standing, formation, shaping, and other processes to obtain a lithium-ion battery.

The preparation methods of Examples 2 and 3 were substantially the same as that of Example 1, except that the energy consumption per ton during graphitization treatment remained unchanged, and the ratio of the maximum power to the rated power and the duration at the maximum power were correspondingly adjusted, as shown in Table 1.

The preparation methods of Examples 4 and 5 were substantially the same as that of Example 1, except that the volume proportion of fibrous structures in the raw material was adjusted, and the raw material was directly purchased, as shown in Table 1.

The preparation methods of Examples 6 to 8 were substantially the same as that of Example 1, except that the proportion of fine powder removal from the raw material was adjusted, as shown in Table 1.

**Table 1**

| No. | Process conditions | | |
|---|---|---|---|
| | Volume proportion of fibrous structure | Maximum power/rated power | Mass ratio of fine powder removed |
| Example 1 | 62.3% | 80% | 21% |
| Example 2 | 62.3% | 90% | 21% |
| Example 3 | 62.3% | 70% | 21% |
| Example 4 | 56.7% | 80% | 21% |
| Example 5 | 67.3% | 80% | 21% |
| Example 6 | 62.3% | 80% | 29% |
| Example 7 | 62.3% | 80% | 17% |
| Example 8 | 62.3% | 80% | 11% |

The preparation method of Comparative Example 1 was substantially the same as that of Example 1, except that the maximum power was the rated power of the device and the duration at the maximum power was 35 h, and the surface layer region of the particle body of the prepared graphite negative electrode active material had no disordered layer.

A specific preparation method of Comparative Example 2 was as follows:
The graphite negative electrode active material obtained from Comparative Example 1 and a carbonaceous precursor pitch were mixed in a mixer at a mass ratio of 100:3 for 2 h, and then the above mixed material was placed in a high-temperature furnace for heat treatment under N₂ atmosphere. After the reaction was completed, the material was cooled and sieved to obtain a carbon-coated negative electrode active material. The rotation speed of the mixer was 200 r/min, the heating rate of the high-temperature furnace was 5 °C/min, and the material was held at 1100 °C for 2 h for heat treatment.

In Comparative Example 2, the coating layer of graphite was not located in the surface layer region of the particle body, but on the surface of the graphite particle body. The thickness of the coating layer was 12.1 nm, and the coefficient of variation of the thickness of the coating layer was 64.3%.

### Battery Performance Test

### (1) Maximum charging rate test of secondary battery

At 25 °C, the secondary battery was charged at a constant current of xC until the voltage reached 3.65 V, then charged at a constant voltage of 3.65 V until the current was less than 0.05C, and discharged at 1C until the voltage reached 2.5 V. After this process was repeated ten times, the battery was charged at a constant current of xC until the voltage reached 3.65 V, and then the negative electrode plate was disassembled, and the lithium plating on the surface of the negative electrode plate was observed. If no lithium plating was observed on the surface of the negative electrode plate, the charging rate xC was increased stepwise in increments of 0.1C, and the test was repeated until lithium plating was observed on the surface of the negative electrode plate. The test was then terminated, and the charging rate of (x-0.1)C was defined as the maximum charging rate of the battery.

### (2) Cycle performance test of secondary battery

At 60 °C, the batteries prepared in the above examples and comparative examples were charged at a constant current of 1C until the voltage reached 3.65 V, and then charged at a constant voltage of 3.65 V until the current was not more than 0.05C. Subsequently, the battery was discharged at a constant current of 1C until the voltage reached 2.5 V. This process was defined as one charge-discharge cycle, and the discharging capacity of the first cycle was recorded as C0. The charge-discharge cycle was repeated until the battery capacity was decayed to 80% of the initial capacity C0, at which point the test was terminated, and the number of completed cycles was recorded.

### (3) 90-Day storage performance test of secondary battery

At 25 °C, the batteries prepared in the above examples and comparative examples were charged at a constant current of 1C until the voltage reached 3.65 V, and then charged at a constant voltage of 3.65 V until the current was not more than 0.05C. Subsequently, the batteries were discharged at a constant current of 1C until the voltage reached 2.5 V. This process was defined as one charge-discharge cycle, and the discharging capacity of the first cycle was recorded as C1. Subsequently, the fully charged battery cells were stored at 60 °C for different durations. Every 30 days, the battery cells were taken out and the residual capacity was tested at 25 °C, which was defined as one storage cycle, and the discharging capacity at this test was recorded as the discharging capacity after the first storage cycle. The test process for the first storage cycle was then repeated, and the discharging capacity during the storage process was recorded and divided by the discharging capacity C1 of the first cycle to obtain the capacity retention rate after 90 days of storage.

### Results

As can be seen from Table 2, the graphite negative electrode active material according to the embodiments of the present disclosure includes a disordered layer in the surface layer region of the particle body, thereby enabling the secondary battery to simultaneously exhibit good kinetic performance, cycle life, and storage stability.

**Table 2**

| No. | Material property | Battery performance | | |
|---|---|---|---|---|
| | Whether the surface layer region of graphite particle body includes a disordered layer | Maximum charging rate | Cycle performance (cycle) | Storage performance |
| Example 1 | Yes | 1.21C | 2011 | 93.60% |
| Comparative Example 1 | No | 0.92C | 1725 | 91.20% |
| Comparative Example 2 | No | 1.35C | 1604 | 89.30% |

As can be seen from Table 3, the disordered layers having a thickness of 3 nm to 20 nm could effectively balance the kinetic performance, cycle life, and storage stability of the battery.

**Table 3**

| No. | Material property | Battery performance | | |
|---|---|---|---|---|
| | Disordered layer thickness [nm] | Maximum charging rate | Cycle performance (cycle) | Storage performance |
| Example 1 | 11.2 | 1.21C | 2011 | 93.60% |
| Example 2 | 5.6 | 1.05C | 1890 | 92.90% |
| Example 3 | 13.6 | 1.26C | 2389 | 93.20% |
| Example 4 | 14.7 | 1.16C | 2204 | 92.80% |
| Example 5 | 6.7 | 1.22C | 2137 | 92.10% |

As can be seen from Table 4, when the particle size distribution (Dv90-Dv10)/Dv50 of the graphite negative electrode active material was 1.0 to 1.5, the secondary batteries simultaneously exhibited good kinetic performance, cycle life, and storage stability.

**Table 4**

| No. | Material property | Battery performance | | |
|---|---|---|---|---|
| | (Dv90-Dv10)/Dv50 | Maximum charging rate | Cycle performance (cycle) | Storage performance |
| Example 1 | 1.28 | 1.21C | 2011 | 93.60% |
| Example 6 | 1.00 | 1.33C | 2120 | 93.90% |
| Example 7 | 1.37 | 1.13C | 1987 | 93.00% |
| Example 8 | 1.45 | 1.18C | 1921 | 92.30% |

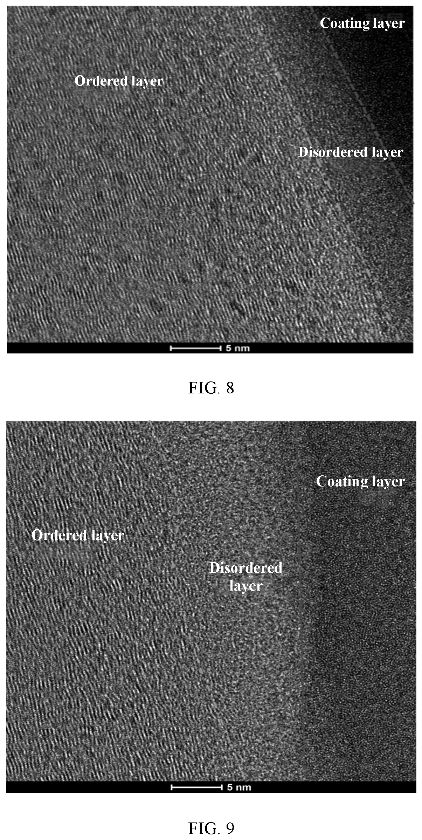

FIG. 8 is a transmission electron microscopy image of the graphite negative electrode active material prepared according to Example 1. FIG. 9 is a transmission electron microscopy image of the graphite negative electrode active material prepared according to Comparative Example 2. As can be seen from the comparison between FIG. 8 and FIG. 9, the thickness of the disordered layer of the graphite negative electrode active material according to the embodiments of the present disclosure is thin and uniform, and the coefficient of variation of the thickness of the disordered layer is low.

It should be noted that the present disclosure is not limited to the embodiments described above. The embodiments described above are merely examples, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure

## Claims

1. A graphite negative electrode active material, wherein a particle body of the graphite negative electrode active material comprises an internal region and a surface layer region at least partially surrounding the internal region, the surface layer region refers to a region formed by extending from a surface of the particle body of the graphite negative electrode active material to an interior of the particle by a distance of 30 nm, and the surface layer region comprises a disordered layer.

2. The graphite negative electrode active material according to claim 1, wherein a thickness of the disordered layer is 1 nm to 20 nm, optionally 3 nm to 16 nm.

3. The graphite negative electrode active material according to claim 1 or 2, wherein a coefficient of variation of the thickness of the disordered layer is less than or equal to 50%, and the coefficient of variation refers to a ratio of a standard deviation of the thickness of the disordered layer to a mean value of the thickness of the disordered layer.

4. The graphite negative electrode active material according to any one of claims 1 to 3, wherein I_{D}/I_{G} of the graphite negative electrode active material is 0.05 to 0.10, I_{D}/I_{G} is a ratio of an intensity of a D peak to an intensity of a G peak obtained from Raman spectroscopy, I_{D} represents the intensity of the D peak in Raman spectroscopy at 1350 ± 100 cm⁻¹, and I_{G} represents the intensity of the G peak in Raman spectroscopy at 1580 ± 100 cm⁻¹.

5. The graphite negative electrode active material according to any one of claims 1 to 4, wherein an interlayer spacing of the disordered layer of the graphite negative electrode active material is denoted as d1, an interlayer spacing of the internal region of the graphite negative electrode active material is denoted as d2, and the graphite negative electrode active material satisfies d1 > d2; optionally, 0.3365 nm ≤ d1 ≤ 0.3378 nm; optionally, 0.3358 nm ≤ d2 ≤ 0.3364 nm.

6. The graphite negative electrode active material according to any one of claims 1 to 5, wherein the graphite negative electrode active material comprises both primary particles and secondary particles; optionally, based on a total number of the primary particles and the secondary particles in the graphite negative electrode active material, a proportion of a number of the secondary particles is less than or equal to 50%.

7. The graphite negative electrode active material according to any one of claims 1 to 6, wherein a particle size distribution (Dv90-Dv10)/Dv50 of the graphite negative electrode active material is 1.0 to 1.5, optionally 1.1 to 1.45.

8. The graphite negative electrode active material according to any one of claims 1 to 7, wherein a volume distribution particle size Dv50 of the graphite negative electrode active material is denoted as A, a volume distribution particle size Dv50 of the graphite negative electrode active material after cold pressing under a pressure of 20000 N is denoted as B, and the graphite negative electrode active material satisfies: B/A ≥ 85%, optionally 85% to 98%.

9. The graphite negative electrode active material according to any one of claims 1 to 8, wherein the graphite negative electrode active material satisfies at least one of the following:
(1) a specific surface area of the graphite negative electrode active material is 1.2 m²/g to 1.9 m²/g, optionally 1.3 m²/g to 1.8 m²/g;
(2) the volume distribution particle size Dv50 of the graphite negative electrode active material is 7.0 µm to 14.0 µm, optionally 8.0 µm to 12.0 µm;
(3) a powder compaction density of the graphite negative electrode active material under a pressure of 49000 N is less than or equal to 1.85 g/cm³, optionally 1.75 g/cm³ to 1.85 g/cm³; and
(4) a specific capacity of the graphite negative electrode active material is 345 mAh/g to 355 mAh/g, optionally 347 mAh/g to 353 mAh/g.

10. A preparation method for a graphite negative electrode active material, comprising the following steps:
providing a raw material;
processing the raw material to obtain an intermediate product;
subjecting the intermediate product to graphitization treatment to obtain a graphitized product; and
sieving the graphitized product to obtain the graphite negative electrode active material, wherein a particle body of the graphite negative electrode active material comprises an internal region and a surface layer region at least partially surrounding the internal region, the surface layer region refers to a region formed by extending from a surface of the particle body of the graphite negative electrode active material to an interior of the particle by a distance of 30 nm, and the surface layer region comprises a disordered layer.

11. The preparation method according to claim 10, wherein
a maximum power of the graphitization treatment is 70% to 90% of a rated power of a graphitization treatment device.

12. The preparation method according to claim 10 or 11, wherein the graphitization treatment satisfies at least one of the following conditions:
(1) a duration at the maximum power in the graphitization treatment is 10 h to 50 h; and
(2) a temperature of the graphitization treatment is 2600 °C to 3000 °C.

13. The preparation method according to any one of claims 10 to 12, wherein
the raw material includes at least one of petroleum coke, needle coke, and pitch coke, and is optionally needle coke.

14. The preparation method according to any one of claims 10 to 13, wherein
based on a total volume of a structure of the raw material, a volume proportion of fibrous structures in the raw material is greater than or equal to 55%, optionally 58% to 70%.

15. The preparation method according to any one of claims 10 to 14, wherein processing the raw material to obtain the intermediate product specifically comprises:
crushing, shaping, and classifying the raw material to obtain a first precursor;
granulating the first precursor to obtain a second precursor; and
carbonizing the first precursor and the second precursor at a low temperature to obtain the intermediate product.

16. The preparation method according to claim 15, wherein the first precursor satisfies at least one of the following conditions:
(1) a Dv50 particle size of the first precursor is 6.0 µm to 10.0 µm;
(2) a particle size distribution (Dv90-Dv10)/Dv50 of the first precursor is 1.05 to 1.75; and
(3) a tap density of the first precursor is 0.5 g/cm³ to 0.7 g/cm³.

17. The preparation method according to claim 15 or 16, wherein a Dv50 particle size of the second precursor is 11.0 µm to 15.0 µm.

18. A negative electrode plate, wherein the negative electrode plate comprises the graphite negative electrode active material according to any one of claims 1 to 9 or the graphite negative electrode active material prepared by the preparation method according to any one of claims 10 to 17.

19. A secondary battery, comprising the negative electrode plate according to claim 18.

20. An electric device, comprising the secondary battery according to claim 19.
